# EUROPÄISCHE PATENTSCHRIFT

(11) **EP 3 834 248 B1**
(45) Veröffentlichungstag und Bekanntmachung des Hinweises auf die Patenterteilung: **02.08.2023**
(21) Anmeldenummer: 19756123.6
(22) Anmeldetag: 05.08.2019
(51) Int. Cl.: H01M 10/34, H01M 10/52

(54) **REKOMBINATIONSSYSTEM MIT EINER REKOMBINATIONSEINRICHTUNG**
RECOMBINATION SYSTEM HAVING A RECOMBINATION DEVICE
SYSTÈME DE RECOMBINAISON COMPRENANT UN DISPOSITIF DE RECOMBINAISON

(30) Priorität: 08.08.2018 DE 102018119301
(43) Veröffentlichungstag der Anmeldung: 16.06.2021
(73) Patentinhaber: BAE BATTERIEN GMBH, 12459 Berlin (DE)
(72) Erfinder: SCHIEMANN, Michael, 14612 Falkensee (DE); ROSS, Julia-Beatrix, 12167 Berlin (DE)
(74) Vertreter: Gulde & Partner
(86) Internationale Anmeldenummer: PCT/EP2019/071012
(87) Internationale Veröffentlichungsnummer: WO 2020/030583

(56) Entgegenhaltungen:
- EP-A1- 1 674 424
- WO-A1-2004/040688

## Beschreibung

Die Erfindung betrifft ein Rekombinationssystem mit einer Rekombinationseinrichtung zur katalytischen Rekombination von in Akkumulatoren entstehendem Wasserstoff und Sauerstoff zu Wasser, wobei die Rekombinationseinrichtung zumindest in einem Teilbereich zumindest ein Katalysatormaterial umfasst.

Akkumulatoren sind weitverbreitet im Einsatz und dienen als wiederaufladbarer Speicher für elektrische Energie auf elektrochemischer Basis. Das Anwendungsspektrum der Blei-Säure-Technologie ist sehr breit, angefangen von der einfachen Starterbatterie als Bordnetz- und Anlasserbatterie wird diese Technologie auch in unterbrechungsfreien Stromversorgungen im Bereitschaftsparallelbetrieb zur Netzausfallversorgung, in Photovoltaikanlagen und in Traktionssystemen für Flurförderfahrzeuge im zyklischen Betrieb eingesetzt.

Ein Merkmal geschlossener Blei-Säure-Akkumulatoren ist der Wasserverlust. Aufgrund der elektrochemischen Eigenschaften zerfällt das Wasser im Elektrolyt des Akkumulators zu Sauerstoff und Wasserstoff, sodass der Elektrolyt-Stand in den einzelnen geschlossenen Zellen absinkt und eine Batterieraumbelüftung zwingend vorgeschrieben ist. Der Wasserzerfall tritt zum einen durch die geringe Zersetzungsspannung von Wasser (1,223 V Wasserzerfallsspannung) auf, zum anderen führt die Elektrolyse im Blei-Säure-Akkumulator bei Überschreitung der Gasungsspannung von 2,40 V pro Zelle zu Wasserzersetzung verbunden mit dem Aufsteigen der Gasblasen.

Dabei entsteht an der negativen Elektrode Wasserstoff, welches ein brennbares aber die Verbrennung nicht unterstützendes Gas ist. An der positiven Elektrode wiederum bildet sich im stöchiometrischen Verhältnis 1:2 Sauerstoff. Diese Gasblasen entweichen dem System, aufgrund der geringen Löslichkeit beider Gase im Elektrolyt, über den Einfüll- und Entgasungsstopfen.

Sowohl innerhalb als auch außerhalb des Batteriekörpers können die beiden Gase wieder miteinander rekombinieren. Bereits bei Raumtemperatur erfolgt die Verbindung von Sauerstoff und Wasserstoff zu Wasser. Dies geschieht jedoch in einer so geringen kaum messbaren Geschwindigkeit, dass ein Wasserstoff- Sauerstoff-Gemisch monatelang aufbewahrt werden kann, ohne eine Umsetzung messen zu können.

Insgesamt wurden die Nachteile der Wasserzersetzung bei Akkumulatorentechnologien mit wässrigem Elektrolyt u. A. des Blei-Säure-Akkumulators schon sehr früh erkannt (beispielsweise 1904 von Herrn Edison) und über verschiedene Entwicklungsstadien wurde versucht, diese Nachteile auszugleichen.

So wurde festgestellt, dass die Beschleunigung des Rekombinationsvorganges von Wasserstoff und Sauerstoffgas unter Zuhilfenahme von Katalysatoren erfolgt. Allgemein bezeichnet, handelt es sich bei den Katalysatoren um Stoffe, welche die Geschwindigkeit einer chemischen Reaktion erhöhen oder verringern können. Da sie sich dabei nicht verbrauchen, liegen Katalysatoren am Ende der Reaktion unverändert vor und treten somit auch nicht in den Reaktionsgleichungen der Umwandlung auf. Eine Umsetzung der Beschleunigung wird durch das Herabsetzen der Aktivierungsenergie realisiert. Somit kann die gehemmte Reaktion von Sauerstoff und Wasserstoff beschleunigt werden.

Die sich frei bewegenden Wasserstoffmoleküle kontaktieren die Oberfläche des Katalysatormaterials. Dort angelagerte frei bewegliche Elektronen sorgen für eine Aufspaltung der Bindungen, verbinden sich mit den einzelnen Wasserstoffatomen und ermöglichen diesen eine freie Bewegung auf der Oberfläche. Die ebenfalls frei beweglichen Sauerstoffmoleküle landen auf der Platinoberfläche und gehen als einzelne Atome eine Bindung mit jeweils zwei Wasserstoffatomen ein. Als Ergebnis sind damit aus einem Sauerstoffmolekül und zwei Wasserstoffmolekülen zwei durch Rekombination hervorgerufene Wassermoleküle entstanden.

Bei der Vereinigung von Sauerstoff und Wasserstoff zurück zu Wasser wird Energie frei, die sich durch eine hohe Wärmeentwicklung darstellt (193 kJ/mol) und den Wassermolekülen das Verlassen des Platinkatalysators ermöglicht. Die getrennten Stoffe sind durch Rekombination mit Hilfe eines Katalysators wieder vereint worden.

Mit Hilfe dieses Effekts wurden unter anderem auch externe katalytische Stopfen zur Rekombination entwickelt. Beim Einsatz des Rekombinationssystems werden die während der Wasserzersetzung in der Batterie entstehenden Gase Wasserstoff und Sauerstoff in den Rekombinator, der auf der Öffnung der Blei-Säure-Batterie aufgebracht ist, geleitet.

Mittels eines integrierten Edelmetallkatalysators, der in einer gasdurchlässigen Keramik enthalten ist, werden diese Gase rekombiniert, wobei Wasserdampf entsteht. Der Wasserdampf kondensiert an den Wänden des Stopfens. Die sich bildenden Wassertropfen fließen nach unten und werden in die Batterie zurückgeführt.

Die Rekombination von Wasserstoff und Sauerstoff ist wie bereits erwähnt ein exothermer Vorgang bei dem Wärme freigesetzt wird.

Der Rekombinator wird als externes Bauteil auf der Öffnung des z. B. Batteriedeckels der Batterie installiert. Gemein ist allen diesen Rekombinationsstopfen, dass sich je nach Angebot der Reaktionspartner Sauerstoff und Wasserstoff und der Menge des Katalysators die gasdurchlässige Keramik sehr stark erwärmt.

Die große Herausforderung besteht darin, diese Wärme in dem Stopfen zu managen, da die gasdurchlässige Keramik meistens in einem oder mehreren Punkten fixiert wird. Normalerweise ist das Aktivelement wie aus vielen Erfindungen bereits bekannt entweder in einer Halterung zweiseitig oder in einer Halterung einseitig befestigt. Bei einer Gleichverteilung des Katalysatormaterials (zum Beispiel mit Palladium belegtes keramisches Oxid) kann es zu einer starken Erwärmung des Trägerröhrchens kommen und dadurch der Träger/Fassung thermisch instabil werden. Andererseits kann der Anteil des Katalysators nicht reduziert werden, da es sich dabei um eine gewisse Mindestmenge handelt, die dazu führt, dass die Rekombination mit ausreichender Effizienz bei entsprechendem Angebot von Sauerstoff- und Wasserstoffgas stattfindet. Hier entsteht die Frage, wie die thermische Belastung des Trägers reduziert werden kann, ohne dass die Effizienz der Rekombination herabgesetzt und dennoch eine Überhitzung des Systems verhindert wird.

Aus dem Stand der Technik sind verschiedene Ansätze als bekannt zu entnehmen, welche nur bedingt unmittelbar auf die obengenannte Fragestellung Bezug nehmen.

So ist aus der EP 1 780 826 B1 ein Gas-Rekombinator als bekannt zu entnehmen. Damit der Wirkungsgrad während des Betriebes aufgrund von möglichen Über- oder Unterdrücken nicht absinkt, sind entsprechende Über- und Unterdruckventile vorgesehen. Insbesondere ein Überdruck kann mit einer erhöhten Temperatur einhergehen. Die Rekombinationseinrichtung ist dabei mittels zweier Zentrierelemente am unteren Ende des Gehäuses vorgesehen, wobei somit ein unmittelbarer Kontakt zu dem unteren Ende des Gehäuses gegeben ist. Eine auftretende Prozesswärme kann somit von der Rekombinationseinrichtung ungehindert auf die tragenden Elemente übertragen werden.

Aus der Druckschrift WO 200 60 48 072 A1 ist ein Rekombinator mit einer Rekombinationseinrichtung zur katalytischen Rekombination von Wasserstoff und Sauerstoff in Akkumulatoren zu Wasser als bekannt zu entnehmen. Damit die Rekombinationseinrichtung infolge des Abtropfens des an der Behälterinnenwand kondensierten Wassers nicht durchnässt, ist vorgesehen, dass die Rekombinationseinrichtung ein Siebelement trägt. Insofern spielt bei dieser Lösung zwar eine verbesserte Prozessführung mit dem Ziel einer verbesserten Effizienz eine Rolle. Allerdings ist das Problem der auftretenden Prozesswärme hier nicht im Fokus und die Lösung liefert hier höchstens einen untergeordneten Aspekt, um auftretende Prozesswärme zu behandeln.

EP 1 674 424 A1 offenbart eine Rekombinationseinrichtung zur katalytischen Rekombination von in Energiespeichern auftretendem Wasserstoff. Die Rekombinationseinrichtung wird von nach dem Baukastenprinzip miteinander kombinierbaren Rekombinationselementen gebildet, die unter Zwischenanordnung eines Absorbers auf einen Sockel im Bodenbereich eines Rekombinationssystems angeordnet sind.

Der Erfindung liegt nun die Aufgabe zugrunde, ein Rekombinationssystem bereitzustellen, welches ein verbessertes Thermomanagement während des Betriebs bezüglich auftretender Prozesswärme gewährleistet.

Erfindungsgemäß ist vorgesehen, dass ein Rekombinationssystem mit einer Rekombinationseinrichtung zur katalytischen Rekombination von in Akkumulatoren entstehendem Wasserstoff und Sauerstoff zu Wasser bereitgestellt wird, wobei die Rekombinationseinrichtung zumindest in einem Teilbereich zumindest ein Katalysatormaterial umfasst. Der zumindest eine Teilbereich über einer Mittellinie der Rekombinationseinrichtung bezogen auf eine Position einer Halterung des Rekombinationssystems für die Rekombinationseinrichtung weist eine erste Teilmenge des Katalysatormaterials auf, wobei die erste Teilmenge größer ist als eine zweite Teilmenge des Katalysatormaterials, welche sich von der Mittellinie der Rekombinationseinrichtung ausgehend in Richtung der Halterung befindet. Somit kann einer auftretenden Prozesswärme besser entgegnet werden und eine thermische Belastung, insbesondere der Halterung, welche auch als Träger bezeichnet werden kann, wird reduziert, ohne dass die Effizienz der Rekombination herabgesetzt wird und dennoch eine Überhitzung des Systems verhindert wird. Aufgrund des unsymmetrischen Einsatzes des Katalysators, welcher beispielsweise in einem Röhrchen vorgesehen sein kann, wird die Temperatur an der befestigten Seite der Rekombinationseinrichtung, welche beispielsweise eine Keramik umfassen kann, deutlich reduziert. Durch das Vergrößern des Abstandes zur Befestigung bei der entsprechenden Längenwahl der Rekombinationseinrichtung, beispielsweise in Form eines Keramikröhrchens, wird die Rekombinationsmasse einseitig weg vom Befestigungsfuß beziehungsweise der Halterung ausgerichtet, sodass entsprechend die thermische Belastung der Befestigung deutlich reduziert wird. Der Katalysator, beispielsweise in Form von Kugeln beziehungsweise Stab, wird dann einseitig angeordnet und die Temperatur an der Befestigung sinkt ab. Entsprechende Versuche mit der gleichen Menge des Katalysators und den verschiedenen Anordnungen zeigen eine deutliche Reduzierung der thermischen Belastung der Halterung beziehungsweise der Befestigung. Es ist somit mittels des vorgestellten Systems möglich eine geringere Überhitzung der Halterung beziehungsweise der Befestigung für die Rekombinationseinrichtung, beispielsweise umfassend eine gasdurchlässige Keramik mit integriertem Edelmetallkatalysator, zu erreichen, wobei eine Gesamthöhe der Rekombinationseinrichtung, beispielweise umfassend ein Keramikröhrchen, sich nicht ändert und auch ein konstanter Umfang des Katalysatormaterials erhalten bleibt. Insofern bleibt die Menge des Katalysators identisch zu anderen Anordnungen und lediglich eine unsymmetrische Anordnung des Katalysators in der Rekombinationseinrichtung, beispielsweise umfassend eine gasdurchlässige Keramik, bewirkt diesen technischen Effekt eines verbesserten Thermomanagements. Eine Position der Halterung ist als Bezugspunkt zu verstehen, sodass sich die erste Teilmenge des Katalysatormaterials über einer Mittellinie der Rekombinationseinrichtung befindet beziehungsweise sich im Wesentlichen gegenüberliegend der Halterung befindet. Mit anderen Worten ist die erste Teilmenge ausgehend von der Position oberhalb einer Mittellinie der Rekombinationseinrichtung vorgesehen.

Erfindungsgemäß ist ferner vorgesehen, dass die Halterung in einem Deckenbereich des Rekombinationssystems angeordnet ist. In diesem Fall ist ein Hauptanteil des Katalysators beziehungsweise eine erste Teilmenge des Katalysators bezogen auf eine Einbaurichtung der Rekombinationseinrichtung unterhalb einer Mittellinie der Rekombinationseinrichtung angeordnet, sodass die zuvor genannten Vorteile sich entsprechend einstellen. Zudem kann in diesem Fall zusätzlich verhindert werden, dass Kondenswasser auf die Rekombinationseinrichtung tropft und sich aufgrund der Benetzung mit Kondenswasser von Komponenten der Rekombinationseinrichtung ein Wirkungsgrad selbiger verschlechtert. Beispielsweise kann die Rekombinationseinrichtung ein keramisches Röhrchen beziehungsweise Element mit integriertem Edelmetallkondensator umfassen, wobei diese Komponenten nicht an einem Fuß von dem Rekombinationssystem montiert werden, sondern direkt unter einem Deckel des Rekombinationssystems. Auf diese Weise ist kein zusätzliches Abschirmelement für das Kondenswasser notwendig, was Kosten einspart. Auch ist diese Form der Aufhängung zusätzlich zu dem unsymmetrischen Aufbau des Katalysatormaterials allgemein thermisch günstiger. Die Gefahr einer erhöhten Wärmeentwicklung bei einer extremen Rekombination und eine extreme Überhitzung mit einer dabei sich einstellenden Zerstörung des Rekombinationssystems kann somit entgegengewirkt werden. Mit anderen Worten entstehen durch das Aufhängen der Rekombinationseinrichtung mit dem beispielsweise keramischen, porösen Röhrchen beziehungsweise Element mit integriertem Edelmetallkondensator thermisch günstigere Verhältnisse, sodass die Erwärmung deutlich reduziert wird und die Wärme besser abgeführt werden kann.

Weitere bevorzugte Ausgestaltungen der Erfindung ergeben sich aus den übrigen, in den Unteransprüchen genannten Merkmalen.

Ferner ist in einer weiteren bevorzugten Ausgestaltung der Erfindung vorgesehen, dass die Halterung an einem Verschlusselement des Rekombinationssystems angeordnet ist, wobei das Verschlusselement zumindest ein Leitelement umfasst, sodass ein Prozessmedium, insbesondere Wasser, mittels des Leitelements zu zumindest einem Teilbereich eines Innenbereichs des Rekombinationssystems geleitet wird. Als weiterer Vorteil dieser Art der Aufhängung von der Rekombinationseinrichtung, welche beispielhaft das Röhrchen beziehungsweise Element aus einem Keramikwerkstoff mit integriertem Edelmetallkondensator umfasst, ist anzuführen, dass vom oberen Bereich des Rekombinationssystems beispielsweise von einem Verschlusselement beispielsweise in Form eines Stopfens ein Herabtropfen des kondensierten Wassers und ein Verschluss der Rekombinationseinrichtung beispielsweise einer Keramik nicht mehr möglich ist. Um diesen Effekt zu unterstützen kann es zudem vorgesehen sein, dass zum Beispiel Teile von der Rekombinationseinrichtung in Form von einem keramischen, porösen Rohr mit Edelmetallkondensator zusätzlich im oberen Bereich befestigt werden, wobei dies an einem Dom des Rekombinationssystems oder an einem externen Stopfen, welcher für die Verwendung in einem Rekombinationssystem ausgelegt ist, geschehen kann. Sowohl der Dom als auch der Stopfen können innen einen kreisförmigen Kreiskegel oder auch andere günstige Formen zum Abführen des kondensierten Wasser aufweisen, um das Abführen des Kondenswassers zu verbessern. Das Verschlusselement kann also auch einstückig in einem Dom von dem Rekombinationssystem vorgesehen sein.

Zudem ist in einer weiteren bevorzugten Ausgestaltung der Erfindung vorgesehen, dass die Rekombinationseinrichtung zumindest einen Verjüngungsbereich aufweist, welcher ausgelegt ist mit der Halterung auf zumindest einer Seite der Halterung eine Verbindung einzugehen. Somit kann der Verjüngungsbereich besonders gut für eine sichere und stabile Verbindung vorgesehen werden.

Auch ist in einer weiteren bevorzugten Ausgestaltung der Erfindung vorgesehen, dass die Halterung zumindest einen Bereich aufweist, welcher ausgelegt ist zumindest ein Rückzündungsschutzelement aufzunehmen und wobei die Halterung zumindest ein Fixierelement umfasst, welches ausgelegt ist mit dem zumindest einen Verjüngungsbereich der Rekombinationseinrichtung eine Verbindung einzugehen. Somit ist ein sicherer Betrieb des Rekombinationssystems besonders gut möglich. Das Fixierelement kann beispielsweise ein Klipp sein. Mit anderen Worten kann die Aufhängung der Rekombinationseinrichtung beispielsweise in Form des Keramikröhrchens mit Katalysator in einer besonderen Ausführung durch ein mechanisches Klippsystem ausgeführt werden. Der Verjüngungsbereich und das Fixierelement beziehungsweise mehrere dieser Komponenten stellen dabei dieses Klippsystem dar, wobei Anzahl und Anordnung auf den jeweiligen Fall angepasst werden können. Die Vorteile liegen zum Beispiel darin, dass keine zusätzlichen Elemente zur Fixierung mehr notwendig und die Befestigung klebefrei realisiert werden kann, da sich Kleber durch Feuchtigkeit und Wärme sich in den Festigkeitseigenschaften ändern könnte. Dies ist vorteilhaft, da im Verarbeitungsprozess keine Trockenzeiten und keine Langzeitabsonderung von Fremdstoffen stattfinden müssen. Die Befestigung kann somit Verjüngungsbereiche aufweisen, welche auch als entsprechende Ausformungen bezeichnet werden können. Zusätzlich, um die Stärke der Fixierung zu unterstützen, können die Rekombinationseinrichtung beziehungsweise das Keramikröhrchen und damit der Katalysator entsprechende Bohrungen und/oder Kerbungen aufweisen. Wie bereits erwähnt, kann die Befestigung sowohl in dem Dom integriert sein oder als separates Teil in Form eines Stopfens eingeschraubt werden.

Ferner ist in einer weiteren bevorzugten Ausgestaltung der Erfindung vorgesehen, dass die Halterung zumindest eine labyrinthartige Öffnung umfasst, welche ausgelegt ist, das zumindest ein Rückzündungsschutzelement funktional mit der Rekombinationseinrichtung zu verbinden. Mit anderen Worten kann in einer besonderen Ausführung die Halterung, welche auch integriert mit einem Verschlusselement beziehungsweise Stopfen ausgeführt sein kann, besagte labyrinthartige Öffnung in Form eines mäanderförmigen Kanals aufweisen, der einen Gasausfluss verzögert und somit mehr Zeit für das Wasserstoff-/Sauerstoffgemisch verbleibt in die Rekombinationseinrichtung in Form beispielsweise eines keramischen, porösen Rohrs mit Edelmetallkondensator einzudringen.

Zudem ist in einer weiteren bevorzugten Ausgestaltung der Erfindung vorgesehen, dass die erste und zweite Teilmenge des Katalysatormaterials miteinander verbunden sind. Die zuvor genannten Vorteile lassen sich somit noch besser umsetzen.

Ferner ist in einer weiteren bevorzugten Ausgestaltung der Erfindung vorgesehen, dass die Rekombinationseinrichtung ein Keramikröhrchen umfasst, wobei die erste und zweite Teilmenge in dem Keramikröhrchen angeordnet ist. Die zuvor genannten Vorteile lassen sich somit noch besser umsetzen.

Schlussendlich ist in einer weiteren bevorzugten Ausgestaltung der Erfindung vorgesehen, dass eine Rekombinationseinrichtung für die Verwendung in einem Rekombinationssystem gemäß den Ansprüchen 1 bis 7 bereitgestellt wird.

Die Rekombinationseinrichtung umfasst ein unsymmetrisch verteiltes Katalysatormaterial, wobei eine erste Teilmenge des Katalysatormaterials größer ist als eine zweite Teilmenge und wobei ein mittlerer Abstand von der ersten Teilmenge zu einer Halterung der Rekombinationseinrichtung größer ist, als ein mittlerer Abstand von der zweiten Teilmenge zu einer Halterung der Rekombinationseinrichtung.

Aufgrund des unsymmetrischen Einsatzes des Katalysators, welcher beispielsweise in einem Röhrchen vorgesehen sein kann, wird die Temperatur an der befestigten Seite der Rekombinationseinrichtung, welche beispielsweise eine Keramik umfassen kann, deutlich reduziert. Durch das Vergrößern des Abstandes zur Befestigung bei der entsprechenden Längenwahl der Rekombinationseinrichtung, beispielsweise in Form eines Keramikröhrchens, wird die Rekombinationsmasse einseitig weg vom Befestigungsfuß beziehungsweise der Halterung ausgerichtet, sodass entsprechend die thermische Belastung der Befestigung deutlich reduziert wird. Der Katalysator, beispielsweise in Form von Kugeln beziehungsweise Stab, wird dann einseitig angeordnet und die Temperatur an der Befestigung sinkt ab. Entsprechende Versuche mit der gleichen Menge des Katalysators und den verschiedenen Anordnungen zeigen eine deutliche Reduzierung der thermischen Belastung der Halterung beziehungsweise der Befestigung.

Es ist somit mittels der vorgestellten Einrichtung möglich, eine geringere Überhitzung der Halterung beziehungsweise der Befestigung für die Rekombinationseinrichtung, beispielsweise umfassend eine gasdurchlässige Keramik mit integriertem Edelmetallkatalysator, zu erreichen, wobei eine Gesamthöhe der Rekombinationseinrichtung, beispielweise umfassend ein Keramikröhrchen, sich nicht ändert und auch ein konstanter Umfang des Katalysatormaterials erhalten bleibt. Insofern bleibt die Menge des Katalysators identisch zu anderen Anordnungen und lediglich eine unsymmetrische Anordnung des Katalysators in der Rekombinationseinrichtung, beispielsweise umfassend eine gasdurchlässige Keramik, bewirkt diesen technischen Effekt eines verbesserten Thermomanagements.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Rekombinationssystem mit einer Rekombinationseinrichtung;
- Figur 2: ein Rekombinationssystem mit einer Rekombinationseinrichtung in einer Halterung im Deckenbereich;
- Figur 3: Beispiele von Anordnungen von Katalysatormaterial in jeweiligen Rekombinationseinrichtungen gemäß dem Stand der Technik;
- Figur 4: Beispiele von Anordnungen von Katalysatormaterial in jeweiligen Rekombinationseinrichtungen gemäß der vorliegenden Erfindung.

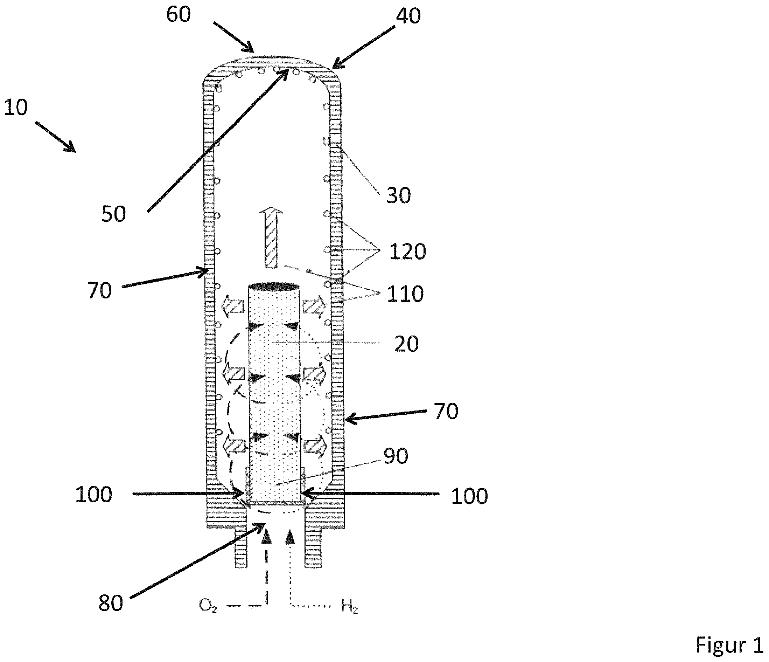

Figur 1 zeigt eine Schnittansicht eines Rekombinationssystems 10 mit einer Rekombinationseinrichtung 20, wie es sich beispielsweise gemäß dem Stand der Technik darstellen könnte. Das Rekombinationssystem 10 umfasst dabei einen Dom 30 und eine Rekombinationseinrichtung 20. Der Dom 30 ist hier beispielhaft als eine im Wesentlichen rechteckige, hohle und zylinderförmige Geometrie dargestellt. Der Dom 30 weist dabei eine Außenwandung 40 und eine Innenwandung 50 auf. Bezogen auf die Bildebene weist der Dom 30 oben abgerundete Eckbereiche auf, sodass ein Deckenbereich 60 bogenförmig in seitliche Wandungen 70 übergeht. Wiederum bezogen auf die Bildebene weist der Dom 30 unten einen Öffnungsbereich 80 auf, in welchen die Gase O₂ und H₂ strömen. Diese Gasströme werden mit jeweils verschiedenen gestrichelten Linien schematisch dargestellt, wobei Pfeile andeuten, dass diese Gase von unten in ein Inneres des Doms 30 strömen. Oberhalb des Öffnungsbereichs 80 ist eine Halterung 90 zu erkennen. In der Halterung 90, welche auch als Fixierung bezeichnet werden kann, ist die Rekombinationseinrichtung 20 aufrecht gehalten. Zwei Backenelemente 100 von der Halterung 90 halten die Rekombinationseinrichtung 20 in einer aufrechten Position.

Die Rekombinationseinrichtung 20 weist eine im Wesentlichen zylinderförmige Geometrie auf. Alle gezeigten Geometrien, Abmaße und Größenverhältnisse sind nur beispielhaft zu verstehen und sind lediglich als eine schematische Anordnung zu verstehen.

Die Rekombinationseinrichtung 20 ist hier beispielhaft als eine gasdurchlässige Keramik mit integriertem Edelmetallkatalysator dargestellt und kann auch als Keramikröhrchen bezeichnet werden. Die jeweils unterschiedlichen gestrichelten Linien der beiden Gase sind kreisförmig im Inneren des Doms 30 dargestellt und weisen mit der Pfeilspitze auf das Keramikröhrchen. Blockpfeile weisen von dem Keramikröhrchen weg und visualisieren den entstehenden Wasserdampf 110. Der Wasserdampf 110 kondensiert an der Innenwandung 50 zu kondensiertem Wasser 120. Insofern ist der Dom 30 zur Kondensation des Wasserdampfs 110 gedacht. Im oberen Bereich des Doms 30 kondensiert Wasserdampf 110 auch im Deckenbereich 60. Gemäß dem Schwerkraftprinzip ist es möglich, dass kondensiertes Wasser 120 in Form von nicht näher dargestellten Wassertropfen in Richtung der Rekombinationseinrichtung 20 fällt. Auf der Rekombinationseinrichtung 20 können demnach nicht näher dargestellte Wasserflecken entstehen. Mit anderen Worten ist die Keramik benetzt mit Kondenswasser 120, sodass der Wirkungsgrad der Rekombinationseinrichtung 20 sich dadurch verringert.

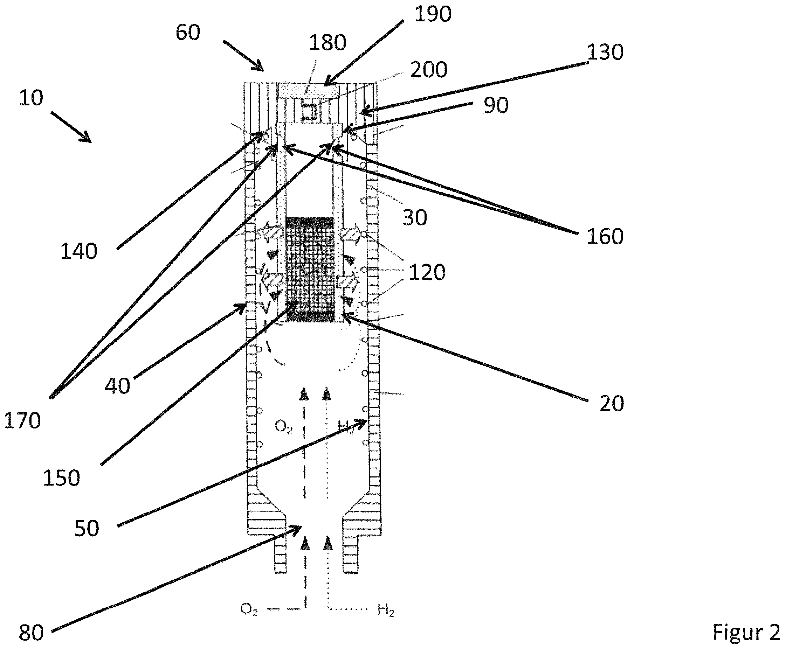

Figur 2 zeigt ein Rekombinationssystem 10 mit einer Rekombinationseinrichtung 20 in einer Halterung 90 im Deckenbereich 60. Die Halterung ist an einem Verschlusselement 130 angeordnet. Zum Beispiel kann die Halterung 90 einstückig mit dem Verschlusselement 130 vorgesehen sein, wie schematisch in der Figur 2 angedeutet. Das Verschlusselement 130 umfasst ein Leitelement 140, welches eine kegelförmige Geometrie aufweist, sodass kondensiertes Wasser beziehungsweise Kondenswasser 120 letztlich an eine Innenwandung 50 von einem Dom 30 des Rekombinationssystems 10 geleitet werden kann. Der Dom 30 weist zudem eine Außenwandung 40 auf und umfasst im unteren Bereich einen Öffnungsbereich 80, in welchen die Gas O₂ und H₂ strömen. Diese Gasströme werden mit jeweils verschiedenen gestrichelten Linien schematisch dargestellt, wobei Pfeile andeuten, dass diese Gase von unten in ein Inneres des Doms 30 strömen. Diese Gase strömen dann nach oben und erreichen von unten kommend die Rekombinationseinrichtung 20. Dies wird in der Figur 2 durch gestrichelte Linien im hohlen Dom 30 angedeutet.

Die Rekombinationseinrichtung 20 ist als gasdurchlässige Keramik mit integriertem Edelmetallkatalysator dargestellt, wobei ein Katalysatormaterial 150 am unteren Ende der gasdurchlässigen Keramik beziehungsweise des Keramikröhrchens angeordnet ist. Das Katalysatormaterial 150 kann beispielsweise ein Edelmetallkatalysator sein. Dieses Katalysatormaterial 150 ist im Inneren des Röhrchens angeordnet und ist größtenteils unterhalb einer gedachten Mittellinie der Rekombinationseinrichtung 20 angeordnet.

Mit anderen Worten befindet sich das Katalysatormaterial 150 überwiegend gegenüber der Halterung 90 und ist somit unsymmetrisch verteilt in der Rekombinationseinrichtung 20 vorgesehen.

Die Rekombinationseinrichtung 20 weist zudem im oberen Bereich zwei Verjüngungsbereiche 160 auf. An diesen Stellen weist die Halterung zudem passend zwei Fixierelemente 170 auf. Diese Fixierelemente 170 haben die Form von Klipps. Zusammen bilden die Verjüngungsbereiche 160 und die Fixierelemente 170 eine Art Klippsystem, sodass die Rekombinationseinrichtung 20 in dem System 10 im oberen Bereich gehalten wird. Das Verschlusselement 130 weist zudem einen Bereich 180 auf, welcher ausgelegt ist ein Rückzündungsschutzelement 190 aufzunehmen. Unterhalb dieses Bereiches 180 ist zudem eine Öffnung 200 zu erkennen, welche das Rückzündungsschutzelement 190 in dem Bereich 180 funktional mit der Rekombinationseinrichtung 20 verbindet. Das Rückzündungsschutzelement 190 könnte beispielsweise eine keramische Fritte als Rückzündungsschutz darstellen.

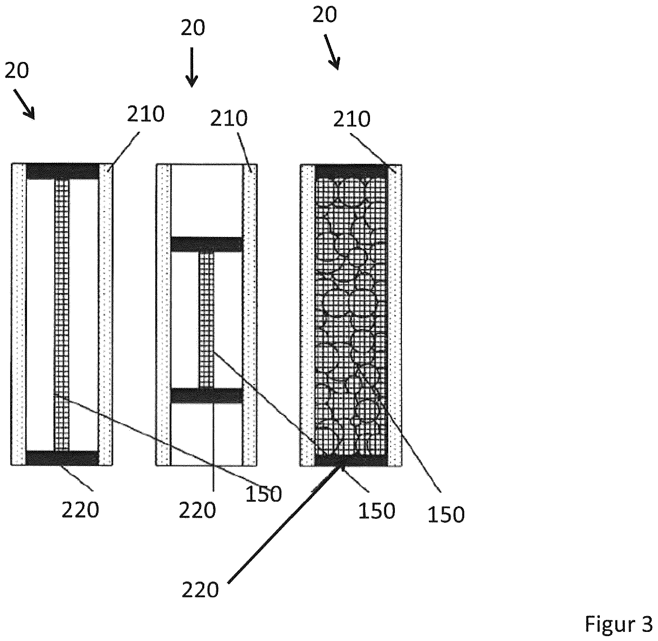

Figur 3 zeigt Beispiele von Anordnungen von Katalysatormaterial 150 in jeweiligen Rekombinationseinrichtungen 20 gemäß dem Stand der Technik. Die jeweiligen Rekombinationseinrichtungen 20 weisen dabei jeweilige Keramikröhrchen 210, welche jeweils im Inneren Katalysatormaterial 150 aufweisen, auf. Das jeweilige Katalysatormaterial 150 wird dabei jeweils oben und unten von einem Verschluss (220) in dem Keramikröhrchen 210 gehalten. Das jeweilige Katalysatormaterial 150 ist dabei jeweils symmetrisch innerhalb des jeweiligen Keramikröhrchens 210 vorgesehen.

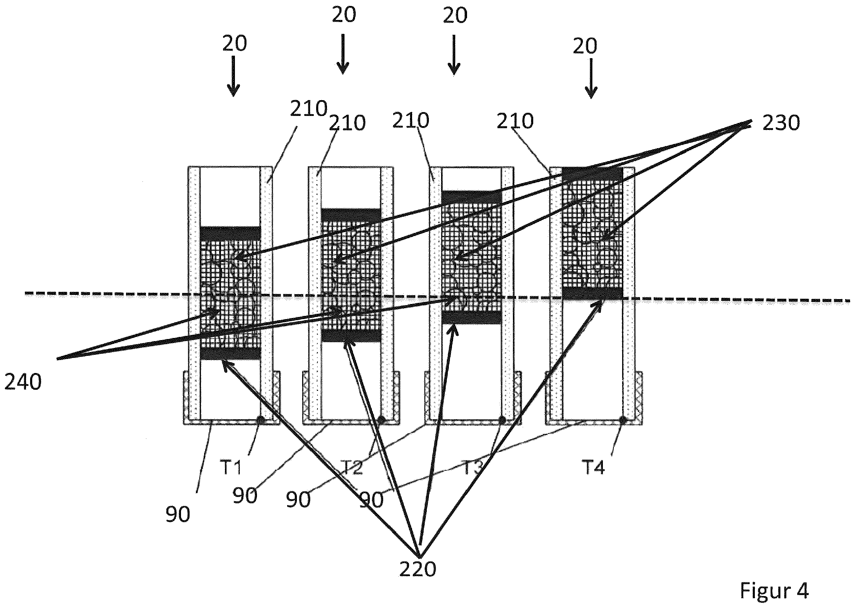

Figur 4 zeigt Beispiele von Anordnungen von Katalysatormaterial 150 in jeweiligen Rekombinationseinrichtungen 20 gemäß der vorliegenden Erfindung. Die jeweiligen Rekombinationseinrichtungen 20 weisen dabei jeweilige Keramikröhrchen 210, welche jeweils im Inneren Katalysatormaterial 150 umfassen, auf. Das jeweilige Katalysatormaterial 150 wird dabei jeweils oben und unten von einem Verschluss 220 in dem Keramikröhrchen 210 gehalten. Bezogen auf die Bildebene werden die jeweiligen Rekombinationseinrichtungen 20 unten von einer Halterung 90 gehalten.

Die erste Rekombinationseinrichtung 20 links weist eine symmetrische Verteilung des Katalysatormaterials 150 auf. Die übrigen Rekombinationseinrichtungen 20 weisen jeweils eine unsymmetrische Verteilung des Katalysatormaterials 150 auf, wobei eine erste Teilmenge 230 des Katalysatormaterials 150 jeweils größer ist als eine zweite Teilmenge 240. Die größere erste Teilmenge 230 ist zudem jeweils weiter entfernt von der Halterung 90 als die zweite Teilmenge 240. Die erste und zweite Teilmenge 230, 240 sind jeweils oberhalb beziehungsweise unterhalb einer gestrichelt angedeuteten Mittellinie der jeweiligen Rekombinationseinrichtungen 20 vorgesehen.

Ganz rechts ist ein Sonderfall dargestellt, da hier das gesamte Katalysatormaterial 150 ober halb der gestrichelten Mittellinie vorgesehen ist. Im Vergleich zu der symmetrischen Verteilung des Katalysatormaterials 150 verbleibt die Menge des zu verteilenden Katalysatormaterials 150 jeweils gleich in allen gezeigten Beispielen. An der Halterung 90 sind jeweilige Messpunkte T1, T2, T3, T4 dargestellt, an denen jeweils eine Temperatur während eines Betriebszustandes gemessen wird. Je weiter das Katalysatormaterial 150 von der Halterung 90 entfernt wird, desto niedriger ist die gemessene Temperatur am Messpunkt der Halterung 90, welche auch als Befestigung bezeichnet werden kann, sodass sich folgender Bezug im Versuch bei einem Betrieb der jeweiligen Rekombinationseinrichtungen 20 einstellt: T4 < T3 < T2 < T1.

### Bezugszeichen

- 10: Rekombinationssystem
- 20: Rekombinationseinrichtung
- 30: Dom
- 40: Außenwandung
- 50: Innenwandung
- 60: Deckenbereich
- 70: Seitenwandung/ Wandung
- 80: Öffnungsbereich
- 90: Halterung
- 100: Backenelement
- 110: Wasserdampf
- 120: Kondenswasser
- 130: Verschlusselement
- 140: Leitelement
- 150: Katalysatormaterial
- 160: Verjüngungsbereich
- 170: Fixierelement
- 180: Bereich
- 190: Rückzündungsschutzelement
- 200: Öffnung
- 210: Keramikröhrchen
- 220: Verschluss
- 230: erste Teilmenge
- 240: zweite Teilmenge

## Patentansprüche

1. Rekombinationssystem (10) mit einer Rekombinationseinrichtung (20) zur katalytischen Rekombination von in Akkumulatoren entstehendem Wasserstoff und Sauerstoff zu Wasser, wobei die Rekombinationseinrichtung zumindest in einem Teilbereich zumindest ein Katalysatormaterial (150) umfasst, der zumindest eine Teilbereich über einer Mittellinie der Rekombinationseinrichtung (20) bezogen auf eine Position einer Halterung (90) des Rekombinationssystems (10) für die Rekombinationseinrichtung (20) eine erste Teilmenge (230) des Katalysatormaterials (150) aufweist, wobei die erste Teilmenge (230) größer ist als eine zweite Teilmenge (240) des Katalysatormaterials (150), welche sich von der Mittellinie der Rekombinationseinrichtung (20) ausgehend in Richtung der Halterung (90) befindet.
**dadurch gekennzeichnet, dass** die Halterung (90) in einem Deckenbereich (60) des Rekombinationssystems (10) angeordnet ist.

2. Rekombinationssystem (10) nach Anspruch 1, wobei die Halterung (90) an einem Verschlusselement (130) des Rekombinationssystems (10) angeordnet ist, wobei das Verschlusselement (130) zumindest ein Leitelement (140) umfasst, sodass ein Prozessmedium, insbesondere Wasser, mittels des Leitelements zu zumindest einem Teilbereich eines Innenbereichs des Rekombinationssystems (10) geleitet wird.

3. Rekombinationssystem (10) nach Anspruch 1 und 2, wobei die Rekombinationseinrichtung (20) zumindest einen Verjüngungsbereich (160) aufweist, welcher ausgelegt ist, mit der Halterung (90) auf zumindest einer Seite der Halterung (90) eine Verbindung einzugehen.

4. Rekombinationssystem (10) nach Anspruch 1 bis 3, wobei die Halterung (90) zumindest einen Bereich (180) aufweist, welcher ausgelegt ist, zumindest ein Rückzündungsschutzelement (190) aufzunehmen und wobei die Halterung (90) zumindest ein Fixierelement (170) umfasst, welches ausgelegt ist, mit dem zumindest einen Verjüngungsbereich (160) der Rekombinationseinrichtung (20) eine Verbindung einzugehen.

5. Rekombinationssystem (10) nach Anspruch 1 bis 4, wobei die Halterung (90) zumindest eine labyrinthartige Öffnung (200) umfasst, welche ausgelegt ist das zumindest ein Rückzündungsschutzelement (190) funktional mit der Rekombinationseinrichtung (20) zu verbinden.

6. Rekombinationssystem (10) nach Anspruch 1, wobei die erste und zweite Teilmenge (230, 240) des Katalysatormaterials (150) miteinander verbunden sind.

7. Rekombinationssystem (10) nach Anspruch 1 oder Anspruch 6, wobei die Rekombinationseinrichtung (20) ein Keramikröhrchen umfasst, wobei die erste und zweite Teilmenge (230, 240) in dem Keramikröhrchen (210) angeordnet ist.

8. Rekombinationseinrichtung (20) für die Verwendung in einem Rekombinationssystem (10) gemäß den Ansprüchen 1 bis 7, **dadurch gekennzeichnet, dass** die Rekombinationseinrichtung (20) ein unsymmetrisch verteiltes Katalysatormaterial (150) umfasst, wobei eine erste Teilmenge (230) des Katalysatormaterials (150) größer ist als eine zweite Teilmenge (240) und wobei ein mittlerer Abstand von der ersten Teilmenge (230) zu einer Halterung (90) der Rekombinationseinrichtung (20) größer ist als ein mittlerer Abstand von der zweiten Teilmenge (240) zu der Halterung (90) des Rekombinationseinrichtung (20).

## Claims

1. Recombination system (10) with a recombination device (20) for catalytic recombination of hydrogen and oxygen produced in accumulators to form water, the recombination device comprising at least one catalyst material (150) in at least one partial region, the at least one partial region has a first subset (230) of the catalyst material (150) above a centre line of the recombination device (20) relative to a position of a holder (90) of the recombination system (10) for the recombination device (20), the first subset (230) being greater than a second subset (240) of the catalyst material (150) which is located starting from the centre line of the recombination device (20) in the direction of the holder (90),
**characterised in that** the holder (90) is arranged in a slab area (60) of the recombination system (10).

2. Recombination system (10) according to claim 1, wherein the holder (90) is arranged on a closure element (130) of the recombination system (10), wherein the closure element (130) comprises at least one conductive element (140), so that a process medium, in particular water, is conducted by means of the conductive element to at least a partial region of an inner region of the recombination system (10).

3. Recombination system (10) according to claim 1 and 2, wherein the recombination device (20) comprises at least one taper portion (160) adapted to connect with the holder (90) on at least one side of the holder (90).

4. Recombination system (10) according to claim 1 to 3, wherein the holder (90) comprises at least one region (180) adapted to receive at least one backfire protection element (190) and wherein the holder (90) comprises at least one fixing element (170) adapted to connect with the at least one taper portion (160) of the recombination device (20).

5. Recombination system (10) according to claim 1 to 4, wherein the holder (90) comprises at least one labyrinthine opening (200) adapted to functionally connect the at least one backfire protection element (190) to the recombination device (20).

6. Recombination system (10) according to claim 1, wherein the first and second subsets (230, 240) of the catalyst material (150) are connected to each other.

7. Recombination system (10) of claim 1 or claim 6, wherein the recombination device (20) comprises a ceramic tube, wherein the first and second subsets (230, 240) are disposed in the ceramic tube (210).

8. Recombination device (20) for use in a recombination system (10) according to claims 1 to 7, **characterised in that** the recombination device (20) comprises an asymmetrically distributed catalyst material (150), wherein a first subset (230) of the catalyst material (150) is greater than a second subset (240) and wherein an average distance from the first subset (230) to a holder (90) of the recombination device (20) is greater than an average distance from the second subset (240) to the holder (90) of the recombination device (20).

## Revendications

1. Système de recombinaison (10) avec un dispositif de recombinaison (20) pour la recombinaison catalytique d'hydrogène et d'oxygène produits dans des accumulateurs en eau, le dispositif de recombinaison comprenant au moins dans une zone partielle au moins un matériau catalyseur (150), l'au moins une zone partielle présentant, au-dessus d'une ligne médiane du dispositif de recombinaison (20) par rapport à une position d'un support (90) du système de recombinaison (10) pour le dispositif de recombinaison (20), un premier sous-ensemble (230) du matériau catalyseur (150), le premier sous-ensemble (230) étant supérieur à un deuxième sous-ensemble (240) du matériau catalyseur (150), qui se trouve en partant de la ligne médiane du dispositif de recombinaison (20) en direction du support (90),
**caractérisé en ce que** le support (90) est disposé dans une zone de plafond (60) du système de recombinaison (10).

2. Système de recombinaison (10) selon la revendication 1, dans lequel le support (90) est disposé sur un élément de fermeture (130) du système de recombinaison (10), l'élément de fermeture (130) comprenant au moins un élément de guidage (140), de sorte qu'un fluide de traitement, en particulier de l'eau, est guidé au moyen de l'élément de guidage vers au moins une zone partielle d'une zone intérieure du système de recombinaison (10).

3. Système de recombinaison (10) selon les revendications 1 et 2, dans lequel le dispositif de recombinaison (20) présente au moins une zone conique (160) qui est conçue pour être relié au support (90) sur au moins un côté du support (90).

4. Système de recombinaison (10) selon les revendications 1 à 3, dans lequel le support (90) présente au moins une zone (180) qui est conçue pour recevoir au moins un élément de protection contre le retour de flamme (190) et dans lequel le support (90) comprend au moins un élément de fixation (170) qui est conçu pour être relié à l'au moins une zone conique (160) du dispositif de recombinaison (20).

5. Système de recombinaison (10) selon les revendications 1 à 4, dans lequel le support (90) comprend au moins une ouverture en forme de labyrinthe (200) qui est conçue pour relier de manière fonctionnelle l'au moins un élément de protection contre le retour de flamme (190) au dispositif de recombinaison (20).

6. Système de recombinaison (10) selon la revendication 1, dans lequel les premier et deuxième sous-ensembles (230, 240) du matériau catalyseur (150) sont reliés l'un à l'autre.

7. Système de recombinaison (10) selon la revendication 1 ou la revendication 6, dans lequel le dispositif de recombinaison (20) comprend un tube en céramique, dans lequel les premier et deuxième sous-ensembles (230, 240) sont disposés dans le tube en céramique (210).

8. Dispositif de recombinaison (20) destiné à être utilisé dans un système de recombinaison (10) selon les revendications 1 à 7, **caractérisé en ce que** le dispositif de recombinaison (20) comprend un matériau catalyseur (150) réparti de manière asymétrique, dans lequel un premier sous-ensemble (230) du matériau catalyseur (150) est supérieur à un deuxième sous-ensemble (240) et dans lequel une distance moyenne entre le premier sous-ensemble (230) et un support (90) du dispositif de recombinaison (20) est supérieure à une distance moyenne entre le deuxième sous-ensemble (240) et le support (90) du dispositif de recombinaison (20).
